# EUROPEAN PATENT APPLICATION

(11) **EP 3 272 212 A1**
(43) Date of publication of application: **24.01.2018**
(21) Application number: 16202153.9
(22) Date of filing: 05.12.2016
(51) Int. Cl.: A01K 1/02, B62B 9/14

(54) **A PET STOLLER WITH MULTI-STAGE SPLIT CANOPY**

(30) Priority: 21.07.2016 TW 105211029 U
(71) Applicant: Hou, Chueh-Li, Taipei City 106 (TW)
(72) Inventor: LIN, Yi-Chung, 106 Taipei City (TW)
(74) Representative: Cabinet Chaillot

(57) **Abstract**

The present invention is related to a pet stroller with multi-stage split canopy comprising a body, a pet cage and a split canopy. The split canopy is disposed on the top of the pet cage, wherein the split canopy comprises two multi-stage rotors and two symmetrical U-shape pipes, the two multi-stage rotors respectively disposed on the central position of the top of the pet cage in order to oppositely open or close the two symmetrical U-shape pipes, in multi-stage, from the center of the split canopy. Thus, the canopy of the pet cage is more solid and allows the owner to close the pet cage rapidly in a very short time avoiding risks of the pet jumping out under pressure. Additionally, the multi-stage switch design can allow pet's head to expose appropriately , and cooperate with the coverage of semi-opening front and back section of the canopy, to improve the pet's sense of security and stability and let the owner take care and contact the pet easier.

## Description

### FIELD OF THE INVENTION

The present invention is related to a pet stroller. More specifically, the present invention is related to a pet stroller with multi-stage split canopy, which comprises a pet cage with split canopy as a center-shedding and solid structure with rapid multi-stage switch function, to prevent pet jumping out from the pet cage under pressure, which allows to take care the pet easier in the pet cage to improve the usability and security as a whole.

### BACKGROUND OF THE INVENTION

In modem society, it's more and more popular to have a pet no matter by singled, married family or elders, for leisure life, and related studies of science indicate that mental and physical become healthier in the company of pets. Thus, loving pet owners will take care their pets as their own family and carry them out for shopping, strolling, eating, to enjoy the pleasure of going out with their pets.

To take the pet out excepting letting the pet to have proper exercise, a pet stroller is the most free and easiest tool to carry the pet into some public place which should keep the pet off ground. The pet stroller not only can save owners' energy without carrying the pet by themselves, but also let the pet seat or lie in the pet cage of the stroller comfortably and stably to avoid the pet jumping or rushing disorderly, and disturbing others by some sanitation issues including staining or sticking problems. A pet stroller is more necessary for taking care old pets specially, so the pet stroller is a common tool for carrying pet out, in the market.

However, a canopy of conventional pet cage over the pet stroller is usually with structure having a opening in the front end or back end, and even the canopy is designed to open in top, which is still without solid material and multi-stage structure to rapidly cover the pet cage, that the sensitive pets (ex: cats or small breeds) will easily jump out from the pet cage under pressure to cause risks.

Therefore, the present invention is about to disclose how to create a structure of the pet cage which is not only with features of letting the pet have sense of security and stability, but also allowed the owner to close the pet cage rapidly in a very short time to avoid risks of the pet jumping out under pressure, that the owner will be easier to take care the pet in the pet cage to improve the usability and security as a whole.

### SUMMARY OF THE INVENTION

The objective of the present invention is to provide a pet stroller with multi-stage split canopy, which comprises a split canopy disposing on a pet cage, cooperating to a structural design of multi-stage rotor and U-shape pipe, to not only make the canopy of the pet cage more solid but also allow the owner to close the pet cage rapidly in a very short time avoiding risks of the pet jumping out under pressure. Additionally, the multi-stage switch design can allow pet's head to expose appropriately and can cooperate with the coverage of semi-opening front and back section of the canopy, to improve the pet's sense of security and stability and let the owner take care and contact the pet easier.

To achieve the objective mentioned above, the present invention provides a pet stroller with multi-stage split canopy, which comprises a body, a pet cage and a split canopy. The body comprises a frame. The pet cage is disposed on the frame. The split canopy is disposed on the top of the pet cage, wherein the split canopy comprises two multi-stage rotors and two symmetrical U-shape pipes connected to the two multi-stage rotors, the two multi-stage rotors respectively disposed on the central position of the top of the pet cage in order to oppositely open or close the two symmetrical U-shape pipes, in multi-stage, from the center of the split canopy.

In one embodiment of the present invention, a zip is disposed on the opening of the split canopy, and a handle is disposed on the center of top of the split canopy. A ventilating window is disposed on both front side and back side of the split canopy and a roll able curtain is disposed on outer side of the ventilating window. The downside of the frame of the body is able to hang a storage basket.

### BRIEF DESCRIPTION OF THE DRAWINGS

Fig. 1 illustrates a exploded diagram of a pet stroller with multi-stage split canopy according to one embodiment of the present invention;
Fig. 2 illustrates a assembly diagram of a pet stroller with multi-stage split canopy according to one embodiment of the present invention;
Fig. 2A is an enlarged view of part of Fig. 2;
Fig. 3 illustrates a side view of a pet stroller with multi-stage split canopy according to one embodiment of the present invention;
Fig. 4 illustrates a usage reference diagram(1) of a pet stroller with multi-stage split canopy according to one embodiment of the present invention;
Fig. 5 illustrates a usage reference diagram (2) of a pet stroller with multi-stage split canopy according to one embodiment of the present invention; and
Fig. 6 illustrates a usage reference diagram (3) of a pet stroller with multi-stage split canopy according to one embodiment of the present invention.

### DETAILED DESCRIPTION OF THE INVENTION

The following disclosure will be described more fully with reference to the accompanying drawings, in which exemplary embodiments are shown, to let those of ordinary skill in the art easily understand the advantages and effects of the present invention according to the specification.

The present disclosure may allow various kinds of changes or modifications and various changes in form, and specific exemplary embodiments will be illustrated in the drawings and described in detail in the specification. However, it should be understood that the specific exemplary embodiments do not limit the disclosure invention to a specific form, but include every modified, equivalent, or replaced exemplary embodiment within the spirit and technical scope of the present disclosure. In the following description, well-known functions or constructions are not described in detail since they would obscure the exemplary embodiments with unnecessary detail.

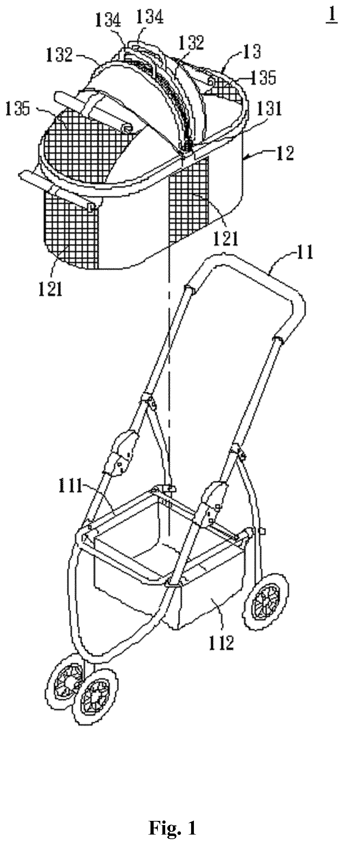

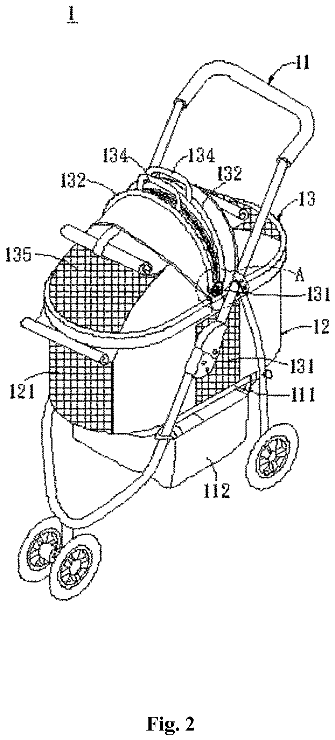

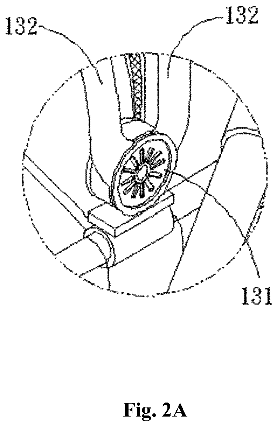

Fig. 1, Fig. 2 and Fig. 3 illustrate a exploded diagram, a assembly diagram and a side view, of a pet stroller with multi-stage split canopy according to one embodiment of the present invention. As the figures showing, a pet stroller 1 with multi-stage split canopy of the present invention comprises a body 11, a pet cage 12 and a split canopy 13. The body 11 comprises a frame 111. The pet cage 12 is disposed on the frame 111. The split canopy 13 is disposed on the top of the pet cage 12 and comprises two multi-stage rotors 131 and two symmetrical U-shape pipes 132 connected to the two multi-stage rotors 131. The two multi-stage rotors 131 are respectively disposed on the central position of each side of the top of the pet cage 12 in order to oppositely open or close the two symmetrical U-shape pipes 132, in multi-stage, from the center of the split canopy13.

In one embodiment of the present invention, a zip 133 is disposed on the opening of the split canopy 13, and a handle 134 is disposed on the center of top of the split canopy 13. A ventilating window 135 is disposed on both front side and back side of the split canopy 13 and a rollable curtain is disposed on outer side of the ventilating window 135. A ventilating window 121 is disposed on both front side, back side, left side and right side of the pet cage 12. The downside of the frame 111 of the body 1 is able to hang a storage basket 112.

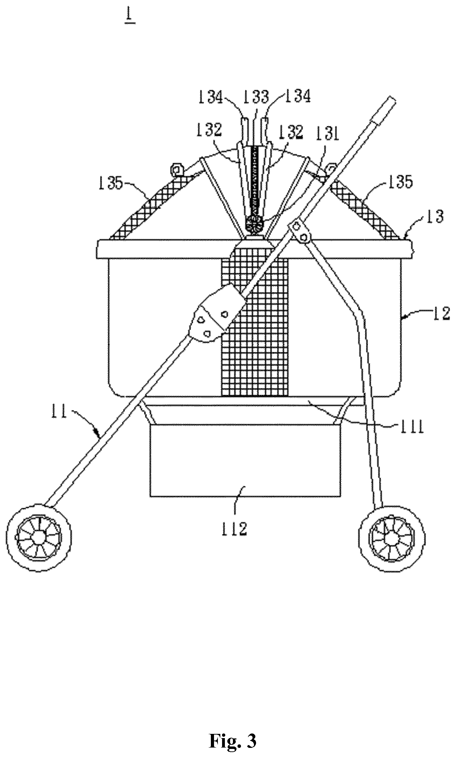

According to the foresaid structure, in use, the split canopy 13 of the present invention can be closed as it shown in Fig.3, and the zip 133 of the top can be zipped while closing, to avoid the pet jump out from the pet cage 12. The design of the handle 134 of the top of the split canopy 13 allows the owner to pick the pet cage 12 up alone and put it down anywhere. Moreover, the ventilating window 135 and the ventilating window 121 are disposed respectively on the split canopy 13 and the pet cage 12, which make the pet more comfortable and feel more ventilated in the pet cage 12.

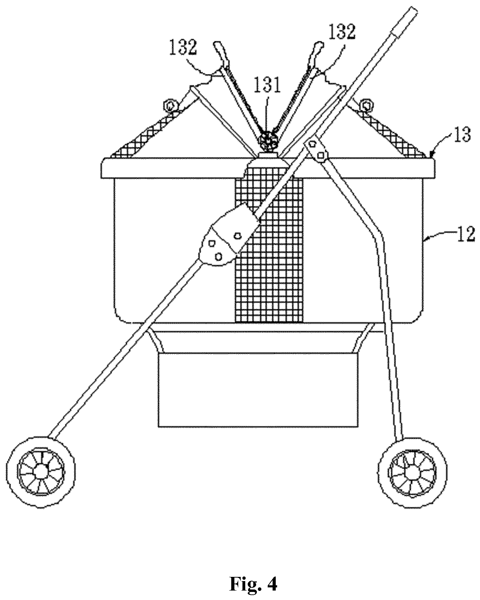

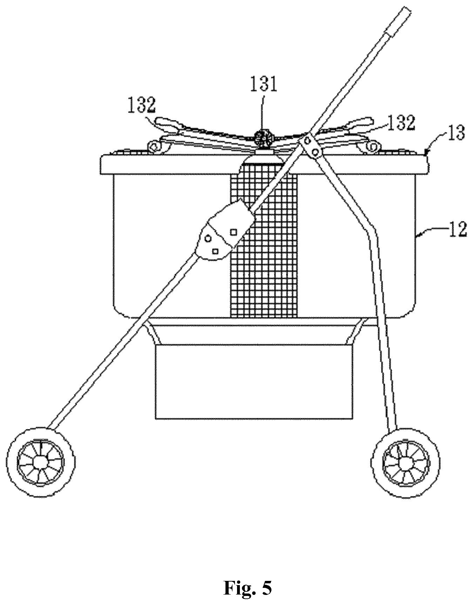

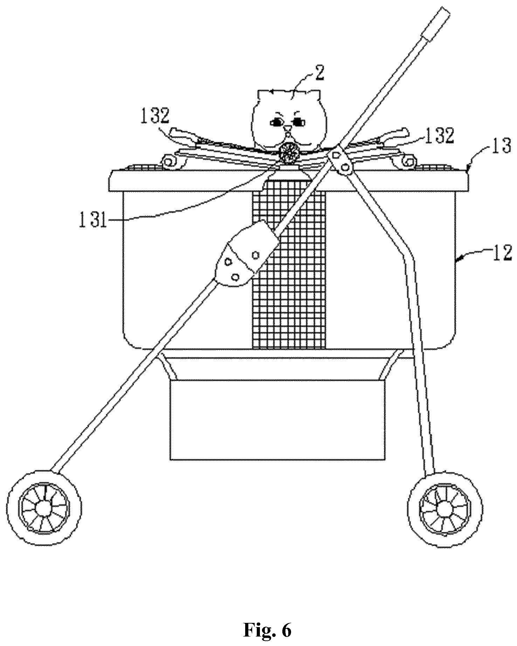

Fig. 4, Fig. 5 and Fig. 6 illustrate a usage reference diagram (1), a usage reference diagram (2) and a usage reference diagram (3), of a pet stroller with multi-stage split canopy according to one embodiment of the present invention. As the figures showing, the split canopy 13 includes multi-stage rotor 131 disposing on the central position of each side of the top of the pet cage 12, and the two multi-stage rotors 131 is connected to the two U-shape pipes 132. By the design of the foresaid structure, the opening of the spilt canopy 13 can by switch in various angles wide. As it shown in Fig. 4, the intersection angle of the two U-shape pipes 132 is approximately 60°, which the split canopy 13 can be opened about 60° wide. As it shown in Fig. 5, the intersection angle of the two U-shape pipes 132 can also be opened t about 180°, which the split canopy 13 can be opened wider. As it shown in Fig. 6, when the intersection angle of the two U-shape pipes 132 is opened to about 180° which the opening is the widest, the pet 2 can easily extend its' head out of the opening. Thus, the owner can adjust the size of the opening of the canopy 13 on demands of convenience for taking care the pet. Moreover, the design of the two U-shape pipes 132 makes the split canopy 13 more solid, and the split canopy 13 can be opened or closed more rapidly to avoid sensitive pet easily jumping out from the pet cage 12 which may cause danger.

Comparing with the conventional art, the pet stroller with multi-stage split canopy of the present invention applies the multi-stage rotor in the middle to cooperate with the design of the U-shape pipes, to not only make the canopy of the pet cage more solid but also allow the canopy to be rapidly opened or closed, even zippered, that will avoid risks of the pet jumping out under pressure. Additionally, the design of the multi-stage rotor allows the size of the opening of the split canopy to be adjusted in different situation, and the pet's head can be exposed appropriately, cooperating with the coverage of semi-opening front and back section of the canopy, to improve the pet's sense of security and stability and let the owner take care and contact the pet easier. Thus, the usability, the security and the stability of the pet stroller can be improved as a whole.

While the present disclosure has been particularly shown and described with reference to exemplary embodiments thereof, it will be understood by those of ordinary skill in the art that various changes in form and details may be made therein without departing from the spirit and scope of the present disclosure as defined by the following claims. The exemplary embodiments should be considered in a descriptive sense only and not for purposes of limitation. Therefore, the scope of the present disclosure is defined not by the detailed description of the present disclosure but by the appended claims, and all differences within the scope will be construed as being included in the present disclosure.

## Claims

1. A pet stroller with multi-stage split canopy, which comprises:
a body comprising a frame;
a pet cage disposing on the frame; and
a split canopy disposing on the top of the pet cage, wherein the split canopy comprises two multi-stage rotors and two symmetrical U-shape pipes connected to the multi-stage rotors, the two multi-stage rotors respectively disposed on the central position of each side of the top of the pet cage, in order to oppositely open or close the two symmetrical U-shape pipes, in multi-stage, from the center of the split canopy.

2. The pet stroller according to claim 1, wherein a zipper is disposed on the opening of the split canopy.

3. The pet stroller according to the claim 1, wherein a handle is further disposed on the center of top of the split canopy.

4. The pet stroller according to the claim 1, wherein a ventilating window is disposed on both front side and back side of the split canopy and a roll able curtain is disposed on outer side of the ventilating window.

5. The pet stroller according to the claim 1, wherein a ventilating window is disposed on both front side, back side, left side and right side of the pet cage.

6. The pet stroller according to the claim 1, wherein the downside of the frame of the body is able to hang a storage basket.
